# EUROPEAN PATENT APPLICATION

(11) **EP 3 611 679 A1**
(43) Date of publication of application: **19.02.2020**
(21) Application number: 19188007.9
(22) Date of filing: 24.07.2019
(51) Int. Cl.: G06Q 20/02

(54) **METHOD AND SYSTEM FOR ISSUING AND ADMINISTRATION THE CURRENCY**

(30) Priority: 13.08.2018 CN 201810914980
(71) Applicant: Worldmoney Blockchain Financial Co., Ltd, Wandchai, Hong Kong (HK)
(72) Inventor: YUAN, Qing, Hong Kong (HK)
(74) Representative: Tiburzi, Andrea

(57) **Abstract**

This invention refers to a method for issuing and administration the currency, which includes following steps, determining the current global population; determining the amount of the currency held by each person; determining the total amount of the currency issuance; everyone on the earth receives said amount of the currency held by each person according to personal properties; determining increment of the currency issuance and the number of new births every year after the first currency issuance; according to the total amount of the currency issuance, evenly distribute all existing non-ownship public resources on the earth, with each unit of the currency correspond to each unit of said public resource. The total amount of the currency issuance is linked up with the global population as well as the global wealth, thereby eliminating the unreasonable and unfair phenomenon on arbitrary printing of real currency without restraint or regulation. Meanwhile, the total amount of the currency is dynamic and gradual change according to the increase and decrease of global population and the change of global wealth.

## Description

### FIELD OF TECHNOLOGY

This invention refers to a method and system for issuing and administration the currency, and in particular to a method and system for issuing and administration the virtual digital currency.

### BACKGROUND

Currency is the consensus of people on a medium to improve the efficiency of transactions. The attribute of currency may be changed with the rise and fall of some economic system. The rise of the gift economy gave rise to commodity currency; the rise of the commodity economy gave rise to metal currency; the rise of timocracy economy gave rise to metal substituted currency and credit currency; the rise of the sharing economy gave rise to super-sovereign currency. Generally, the value of the currency is determined by the transaction efficiency in economic activities. At present, the world is still in a market system dominated by the timocracy economy, with the highest efficiency of credit currency.

Currency includes both currencies in circulation as well as various kinds of saving deposits. In the modern economic field, only a small portion of the currency is embodied in real currency, namely practically used paper currency or coins in circulation (for example, the gold and silver standard currency used in the early days, or the "paper currency" commonly used today). After the popularity of billing systems and computer networks, most transactions were made by checks or electronic currencies (third-party payments or credit cards).

A currency area is a country or region that circulates and uses a single currency. Usually, each country uses only one currency. The currency is issued and controlled by the central banking institution of the government. The central bank has the power to determine the face value and the amount of issuance; however it could not determine the purchasing power of the market. Multiple countries can also use the same currency, such as the European dollar (EURO), which is common in European Union countries (EU), and the West African franc (FCFA) used in economic community of West African states (ECOWAS).

The preparation system of traditional currency issuance is designed to restrict the scale of currency issuance and maintain currency credit. It requires that the currency issuance authority must take some metal or asset as the preparation when issuing currency. Under the metal currency system, the currency issuance takes the precious metal stipulated by law as the issuance preparation. Under the modern credit currency system, the content of the currency issuance preparation system of various countries is relatively complex, which generally includes cash preparation and securities preparation. Thus, the issuance preparation of traditional currency is based on a certain metal or credit, which is regardless with the amount of real wealth in the world. Currency is arbitrarily printed in some currency areas without restraint or regulation, which disturbs the whole currency market and causes unreasonable and unfair phenomenon. Moreover, the issuance preparation basing on a certain metal or a credit does not reflect the rise or fall in population or the changes in global wealth.

In the Internet era, a new type of currency, namely digital currency, appears. Digital currency is a decentralized blockchain technology. As a kind of typical digital currency, bitcoin is a kind of block chain payment system and virtual pricing tools. Because the production and transfer of bitcoin is controlled by password technology, instead of a central issuance authority, it could not be arbitrarily issued. The trading of the bitcoin occurs in the global network, which has special confidentiality. Additionally, third-party financial institutions is unnecessary, user could directly exchange goods and services at anytime and anywhere using personal computers and smartphones wallet encryption software online, without any intermediaries, such as bank, credit card and online payment companies. As a result, digital currency is used more and more widely, but also becomes a medium for illicit transactions.

As a billing system, bitcoin does not rely on central institutions to issue new currency and maintain transactions. Instead, it is completed by the blockchain. As a data block composed of transaction records connected in series by encryption technology, it is possible to attack the bitcoin network only when the attacker's computing power exceeds 50% of the whole network. Double spending is mainly prevented, where a piece of currency has been spent more than once, and impede the confirmation of new transactions. Transaction records are kept by all nodes, and miner records collect and verify transaction information.

As a unit of billing, the smallest unit of bitcoin is 0.00000001 (one hundred millionth) bitcoin, known as "1 satoshi". If necessary, it can be modified to a smaller unit by modifying the protocol, to ensure the circulation is convenient. The block will drops a half once per 210,000 block produced, about every four years, The latest drop in half happened in July 9, 2016, and the convergent of the sum of geometric sequence is necessarily to be limited, there will be no new bitcoin produced by 2140, finally, the sum of bitcoins in circulation will always be slightly less than 21 million. Until March 2018, there are about 17 million bitcoins in supply, and the actual circulation quantity will be further reduced due to key loss and other factors. As a result, the circulation of bitcoin is essentially a fixed value, regardless of the amount of real wealth in the world. In addition, regardless of the property that currencies should have to adjust the reasonable ratio of supply and demand, so bitcoin gradually becomes collection and investments with increasing value, and in fact loses the property of the purchase and circulation of currency.

### SUMMARY

The problem to be solved by the present invention is to provide a method for issuing and administration the currency, to make the amount of the currency linked up with the global population and linked up with the amount of total global wealth, and put an end to the unreasonable and unfair phenomenon on arbitrarily printing currency without restraint or regulation, at the same time, along with the population increase and decrease as well as the change of total global wealth, the currency has a reasonable total amount and characteristics of dynamic and gradual change.

Another purpose of the invention is to provide a home currency for other digital currencies, which acts as a reference standard for the value of other digital currencies.

A method for issuing and administration the currency according to the invention, includes following steps, determining the current global population; determining the amount of the currency held by each person; determining the total amount of the currency issuance by multiplying said global population and said amount of the currency held by each person.

Everyone on the earth receives said amount of the currency held by each person according to personal properties.

After the first currency issuance, determining the number of new births every year, determining the increment of the currency issuance by multiplying the number of new births and said amount of the currency held by each person.

Determining a certain proportion of the total amount of the currency issuance as increment of the currency issuance, said increment of the currency issuance is distributed to the currency issuing authority.

According to the total amount of the currency issuance, evenly distribute all existing non-ownship public resources on the earth; with each unit of the currency correspond to each unit of said public resource.

Each unit of said public resource comprises geographic location, time period, generation time, random number and likes.

The invention also provide a system for issuing and administration the currency, wherein the system comprising a currency issuing authority, which determines the current global population, determines the amount of the currency held by each person; determines the total amount of the currency issuance by multiplying said global population and said amount of the currency held by each person.

The system also comprises a distributing authority, which distributes said amount of the currency held by each person to everyone on the earth.

The system also comprises a increment issuing authority, the increment issuing authority determines the number of new births every year after the first currency issuance, and determines a first increment of the currency issuance by multiplying the number of new births and said amount of the currency held by each person, determines a second increment of the currency issuance by determining a certain proportion of the total amount of the currency issuance this year, and the said second increment of the currency issuance is distributed to the currency issuing authority.

The system also comprises a resource distributing authority, said resource distributing authority according to the total amount of the currency issuance, evenly distributes all existing non-ownship public resources on the earth; with each unit of the currency correspond to each unit of said public resource.

According to the method and system for issuing and administration the currency provided by the invention, the issued virtual digital currency can be distributed fairly, which is linked up with the total wealth of the world and can be accurately quantified itself value, so as to serve as the reference basis for the value of other currencies.

### BRIEF DESCRIPTION OF THE DRAWINGS

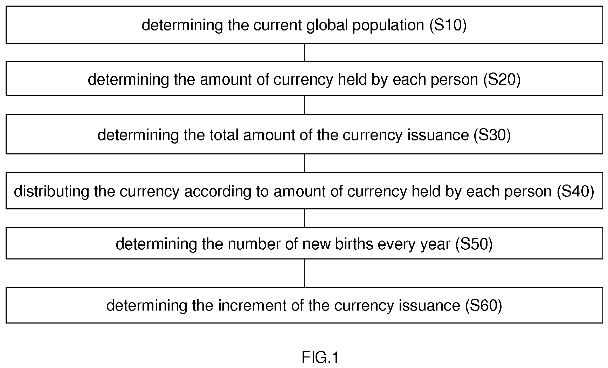

FIG.1 is main steps of method for issuing and administration the currency provided by the invention.

### DETAILED DESCRIPTION

FIG.1 is main steps of method for issuing and administration the currency provided by the invention.

According to the method for issuing and administration the currency of the invention, wherein said currency is a kind of virtual encrypted digital currency that can be circulated globally, and the name of the currency is "Worldnewmoney" (hereinafter referred to as the currency). The currency has the attribute of a normal currency, the basic unit of the currency is "Purchasing power" (P), and one unit (coin) is 1 P.

According to the method for issuing and administration the currency of the invention, the total amount of the currency is linked up with the total population of the world and the total wealth of the world. It put an end to the unreasonable and unfair phenomenon of arbitrary printing and issuance of real currency without restraint or rules.

As shown in Fig.1, the method for issuing and administration the currency according to the invention includes following steps, determining the current global population (S10); determining the amount of the currency held by each person (S20); determining the total amount of the currency issuance by multiplying said global population and said amount of the currency held by each person(S30). In line with the principle of fairness, an equal amount of currency is issued to each person living on the earth according to this invention. At the time of the first issuance, the total amount of currency issuance can be determined by calculation according to the determined number of people living on the earth and the determined amount of the currency held by each person.

For example, it is supposed that there are 7 billion people in the world and the number of the currency held by each person is determined to be 10 (i.e. 10P), thus the first total amount of the currency issuance should be 70 billion P, which is a constant amount of currency.

After the first currency issuance, firstly the currency should be distributed. In order to reflect the fairness of the currency, the fairness principle is reflected the fair respect to the value of each life, which is that everyone is equal, thus, the currency may be called "fair currency". Each person on earth, including a newborn baby, can receive the currency for free. If the number of the currency held by each person is determined to be 10 (i.e. 10P), each person can obtain 10P of the currency for free on the basis of his/her unique physical characteristics, such as fingerprints, fundus, faces or characteristics of other body parts.

The currency provided in the invention has its unique resource characteristic. According to the fairness principle, the currency belongs to all people on the earth evenly, so it can correspond with the existing non-ownership public resources on the earth, to reflect the principle that non-ownership natural resources should evenly belong to all people on the earth. According to the total amount of the currency issuance, evenly distribute all existing non-ownship public resources on the earth; with each unit of the currency correspond to each unit of said public resource (S40). Each unit of said public resource comprises geographic location, time period, generation time, random number and likes. For example, the international waters of the earth could be divided equally into 100 billion pieces (It is supposed that the global population grows at the limit by 10 billion in the future, and each person will be provided 10P for free, total is 100 billion P), each piece has its own four sets of figures of latitude and longitude data, which are never repeated. Each unit P of the currency is marked with four different sets of figures. Once the currencies are issued, each person has the right to own 10 pieces of the international waters. In the same way, other non-ownship natural resources can also be divided and linked up with the currency; they belong to all the people on the earth.

With the increase and decrease of population and the change of global total wealth, the currency also has the dynamic and gradual change of reasonable total amount of currency, to avoid the fixed total amount of currency. In order to take into account that currency should have the attribute of reasonably adjustable ratio between supply and demand, the total amount of the currency changes on the basis of the constant total amount of the currency first issued. The constant total amount refers to the amount issued according to the number of global population, and the constant is only relative, with the arrival of newborn population, the currency amount correspondingly increases. After the first currency issuance, determining the number of new births every year (S50), determining the increment of the currency issuance by multiplying the number of new births and said amount of the currency held by each person (S60). The increments of the currency issuance are distributed to the newborn population.

In order to ensure the currency is provide for free and the user has not to bear the cost for issuance and administration, a certain proportion of the total amount of the currency issuance this year is used as increment which is distributed to the currency issuing authority. For example, 3% of the total amount of the currency issuance this year is used as increment for issuance fee, administration fee and operation fee, and this portion of increment will be distributed to the currency issuing authority.

The currency can link up with all the wealth of the world, equal to the wealth of the world. The increase or decrease of the value of the currency is determined by the increase or decrease of the wealth all over the world. For example, when total global assets of the year were A (US dollar), the value of each P of the currency is equal to total global assets divided by the total amount of the currency, and one unit of the currency, 1 P=A/103 billion (US dollar), wherein the total amount of the currency is counted by the population of 10 billion plus 3% issuance and administration fee. If the total global assets value A increases in the following year, an equal proportion of the currency will be issued to the holder of the currency. If total global asset value A decreases, the currency will depreciate by an equal proportion. For example, if A decreases by 10%, the purchasing power of a unit of the currency changes from 1P to 0.9P.

The currency disclosed in the invention, like other kinds of currency, can be obtained by means of wealth creation, market transaction, profit income, etc.

This currency can be the home currency of various digital currencies, just as the US dollar is the home currency of many physical currencies. There are more than 2,000 virtual currencies now, such bitcoin (BTC) and ether (ETH), value changes between them and pricing standards of which are still reflected in US dollars, rather than a recognized virtual digital currency. The currency disclosed in the invention is linked to the total world material wealth and can be the home currency in the virtual currency. Because the currency disclosed in the invention is the currency linked up with total global material wealth (total global assets) in virtual digital currency, which is quantified into US dollars based on the value of total global assets. Therefore, it is the most authoritative, scientific and fair to make the value of this currency as reference standard and determine the value of other virtual currencies by calculating. According to the daily buying and selling volume of each virtual currency, the rise and fall of various virtual digital currencies are determined by calculating, so as to determine the exchange rate among various currencies. Issuance and administration authority provide publication of exchange rate of the day for various virtual currencies, and provide voluntary exchange service with charging the corresponding service fee. Issuance and administration authority can also provide standard exchange rate to official legal or private public virtual currency exchange office and platforms.

The invention also provide a system for issuing and administration the currency, the system comprises a currency issuing authority, a distributing authority, a resource distributing authority. Wherein the increment issuing authority determines the current global population, determines the amount of the currency held by each person; determines the total amount of the currency issuance by multiplying said global population and said amount of the currency held by each person.

The distributing authority distributes said amount of the currency held by each person to everyone on the earth. Everyone on the earth receives said distributed amount of the currency according to his/her personal properties.

The increment issuing authority is used for the additional currency issuance, which determines the number of new births every year after the first currency issuance, and determines a first increment of the currency issuance by multiplying the number of new births and said amount of the currency held by each person, the currency issuing authority will evenly distribute the first increment of the currency issuance to the newborn population. On the other hand, in order to balance the cost of issuing authority, a certain proportion of the total amount of the currency issuance this year is used for a second increment of the currency issuance, said second increment of the currency issuance is distributed to the currency issuing authority. The proportion can be determined according to issuance cost, administration cost, platform maintenance cost and other factors.

According to the total amount of the currency issuance, the resource distributing authority evenly distributes all existing non-ownship public resources on the earth; with each unit of the currency correspond to each unit of said public resource. Public resources can be non-ownship resources on earth or even in the universe. Basing on the principle of equal distribution, these resources are related to each unit of the currency.

The system for issuing and administration the currency also includes a trading platform, which provides a trading place for the holders of the currency. The holders of the currency conduct transactions according to the wishes of both parties and the ownership of the currency will be changed after the transactions completed.
For a person skilled in this art, any modifications or changes made in accordance with the above embodiments of the invention shall be included in the protection scope of the invention without deviating from the purpose of the invention.

## Claims

1. A method for issuing and administration the currency, wherein includes following steps, determining the current global population; determining the amount of the currency held by each person; determining the total amount of the currency issuance by multiplying said global population and said amount of the currency held by each person.

2. The method for issuing and administration the currency according to claim 1, wherein everyone on the earth receives said amount of the currency held by each person according to personal properties.

3. The method for issuing and administration the currency according to claim 1, wherein after the first currency issuance, determining the number of new births every year, determining the increment of the currency issuance by multiplying the number of new births and said amount of the currency held by each person.

4. The method for issuing and administration the currency according to claim 1, wherein determining a certain proportion of the total amount of the currency issuance as the increment of currency issuance, said increment of the currency issuance is distributed to the currency issuing authority.

5. The method for issuing and administration the currency according to claim 1, wherein according to the total amount of the currency issuance, evenly distributes all existing non-ownship public resources on the earth; with each unit of the currency correspond to each unit of said public resource.

6. A system for issuing and administration the currency, wherein the system comprising a currency issuing authority, which determines the current global population, determines the amount of the currency held by each person; determines the total amount of the currency issuance by multiplying said global population and said amount of the currency held by each person.

7. The system for issuing and administration the currency according to claim 6, wherein the system also comprising a distributing authority, which distributes the amount of the currency held by each person to everyone on the earth.

8. The system for issuing and administration the currency according to claim 6, wherein the system also comprising a increment issuing authority, the increment issuing authority determines the number of new births every year after the first currency issuance, and determines a first increment of the currency issuance by multiplying the number of new births and said amount of the currency held by each person, determines a second increment of the currency issuance by determining a certain proportion of the total amount of the currency issuance this year, and the said second increment of the currency issuance is distributed to the currency issuing authority.

9. The system for issuing and administration the currency according to claim 6, wherein the system also comprising a resource distributing authority, said resource distributing authority according to the total amount of the currency issuance, evenly distributes all existing non-ownship public resources on the earth, with each unit of the currency correspond to each unit of said public resource.
